# EUROPEAN PATENT APPLICATION

(11) **EP 1 204 237 A1**
(43) Date of publication of application: **08.05.2002**
(21) Application number: 00948306.6
(22) Date of filing: 01.08.2000
(51) Int. Cl.: H04L 9/08, H04L 9/10, H04L 9/18, G09C 1/00, G06F 7/58

(54) **ENCRYPTION COMMUNICATION SYSTEM**

(30) Priority: 10.08.1999 JP 22638399
(71) Applicant: Zeon Information Systems Co., Ltd., Meguro-ku, Tokyo 153-0043 (JP)
(72) Inventor: TACHIBANA, Yoichi, Meguro-ku, Tokyo 153-0043 (JP); NOMURA, Akimasa, Meguro-ku, Tokyo 153-0043 (JP); KUSUYAMA, Yukihiro, Meguro-ku, Tokyo 153-0043 (JP)
(74) Representative: Stebbing, Timothy Charles
(86) International application number: JP0005094
(87) International publication number: WO0113570

(57) **Abstract**

A communication method is provided in which a random number sequence serving as the key for conversion of plaintext to encrypted text, and for reconversion of encrypted text to plaintext, cannot easily be discovered by other parties, and in which, when the key is discovered by other parties, this fact can immediately be inferred. It comprises the steps of: placing at a transmission origin a substance A; placing at a transmission destination a substance B, from which measurement data correlated with measurement data of the substance A can be obtained; at the transmission origin, measuring the data for the substance A, generating a first random number sequence from the measurement data, using the first random number sequence to convert plaintext into encrypted text, and transmitting the encrypted text to the transmission destination; and, at the transmission destination, measuring the data for the substance B, generating a second random number sequence from the measurement data, and using the second random number sequence to convert the encrypted text into plaintext.

## Description

### TECHNICAL FIELD

This invention relates to a cryptographic communication method, and in particular to a cryptographic communication method having as a special feature a process of generation of random number sequence, used when generating encrypted text by performing logic operations on a random number sequence and plaintext for communication.

### BACKGROUND ART

The greatest advantage of Internet communications is the ability to simultaneously communicate with an unspecified large number of persons. Thus the Internet has come to be used for communications between companies and within companies; but because messages are exchanged via the servers of other parties, there is a high possibility of electronic eavesdropping. Hence at present there are concerns about sending confidential documents over the Internet.

On the other hand, encryption methods may be used to preserve the confidentiality of communications. In such encryption, a random number sequence is used to convert plaintext into encrypted text for transmission. The larger the number of bits occurring before repetition, the smaller is the danger that the random number sequence will be discovered.

In addition, efforts are made to generate a random number sequence by a method such that the random number sequence cannot easily be generated by other parties. For example, a method is used in which the transmission origin and the transmission destination have a common logic program, and at the time of communication a parameter necessary for generation of the random number sequence is encrypted and transmitted together with the encrypted text. This can be used to obtain the same random number sequence at both the transmission origin and the transmission destination, so that restoration of the plaintext is possible.

However, if the parameter sent in order to generate the random number sequence is discovered through electronic eavesdropping, and the logic program for random number generation is decoded, the encrypted text can easily be known by other parties through electronic eavesdropping, and often this fact of discovery by other parties is not noticed.

As another specific example, it has been proposed that the frequency of radioactive decay of a radioactive substance be measured, and that this be used as a random number sequence; but the random number sequence generated from the frequency of radioactive decay must be sent from the transmission origin to the transmission destination, so that there is the danger that the random number sequence may be discovered by other parties through electronic eavesdropping, and the encrypted text decoded.

Thus when using conventional encryption technology, there is a strong possibility that the decoding by other parties will be noticed only after numerous messages have been sent, and that by the time this is noticed, all confidential information will have been decoded.

Hence in light of the above circumstances, an object of this invention is to provide a communication method in which a random number sequence serving as the key for conversion of plaintext to encrypted text, and for reconversion of encrypted text to plaintext, cannot easily be discovered by other parties, and in which, when the key is discovered by other parties, this fact can immediately be inferred.

### DISCLOSURE OF THE INVENTION

The greatest advantage of the Internet is the ability to simultaneously communicate with an unspecified large number of persons.

However, as a result of studies of communication methods which, boldly discarding this convenience, can be applied only to communications between two parties, a transmission origin and a transmission destination, the inventors found that by setting, in only two limited places, two substances which can be regarded as twins; obtaining exactly the same random number sequence independently from measurements of these substances; and using this random number sequence to convert plaintext into encrypted text, and encrypted text into plaintext, the above object can be achieved.

In the cryptographic communication method of this invention, a substance A is placed at the transmission origin; a substance B, from which measurement data correlated with measurement data for the substance A can be obtained, is placed at the transmission destination; at the above transmission origin, data for the above substance A is measured, a first random number sequence is generated from the above measurement data; the above first random number sequence is used to convert plaintext into encrypted text; and the above encrypted text is transmitted to the above transmission destination. At the above transmission destination, data for the above substance B is measured; a second random number sequence is generated from the above measurement data; and the above second random number sequence is used to convert the above encrypted text into plaintext.

In a preferred aspect, at the above transmission origin, the encrypted text is generated by taking the exclusive OR of the above first random number sequence and the plaintext, and at the above transmission destination, the plaintext is restored by taking the exclusive OR of the above second random number sequence and the received encrypted text.

Another preferred aspect further comprises modification of the algorithm for generation of the random number sequence upon communication of each message, by substitution among rows or substitution among columns of the above first random number sequence, or by specifying a start position for the random number sequence.

In another preferred aspect, information to perform substitution among rows or substitution among columns of the above first random number sequence, or to specify a start position for the random number sequence, is appended to the above encrypted text, or is transmitted by a separate line.

In another preferred aspect, a single solid is broken into two fragments; one fragment is used as the above substance A, placed at the transmission origin; the other fragment is used as the above substance B, placed at the transmission destination; and at the above transmission origin, an image of the depressions and protrusions in the broken face of one of the above fragments is converted into binary values corresponding to black and white colors, to generate the above first random number sequence. At the above transmission destination, an image of the depressions and protrusions in the broken face of the other of the above fragments is converted into binary values corresponding to black and white colors, and the binary values are logically inverted to generate the above second random number sequence.

In another preferred aspect, a random number sequence is generated for each of a plurality of regions in the above broken face; one of the above plurality of regions with a random number sequence is specified; the random number sequence of the specified region is used to generate encrypted text; and, information on the region specified is appended to the encrypted text and sent, or is transmitted by a separate line, to the transmission destination.

In another preferred aspect, the above substances A and B are of a polymeric compound produced without leaving record of a recipe, or produced or synthesized accidentally.

In another preferred aspect, the measurement data for the above substances A and B are of the monomer sequence of the polymer.

Also, the measurement data of the above substances A and B may be of the DNA sequence of an organism.

In another preferred aspect, the above encrypted text is transmitted over the Internet.

The features of this invention will be made clear through the following explanations of embodiments, referring to the drawings.

### BRIEF DESCRIPTION OF THE DRAWINGS

Fig. 1 is a figure which explains the concept of one embodiment of this invention;
Fig. 2 is a figure showing an example of patterns of random number sequences;
Fig. 3 is a figure which explains encryption and decryption;
Fig. 4 is a flowchart showing the procedure for using a plastic material to obtain binary values as a random number sequence, obtained prior to cryptographic communication; and,
Fig. 5 is a flowchart showing the procedure for performing cryptographic communication using stored random number sequence data.

### BEST MODE FOR CARRYING OUT THE INVENTION

Below, embodiments of this invention are explained, referring to the drawings. In the drawings, components which are the same or similar are assigned the same reference number or reference symbol for use in explanations.

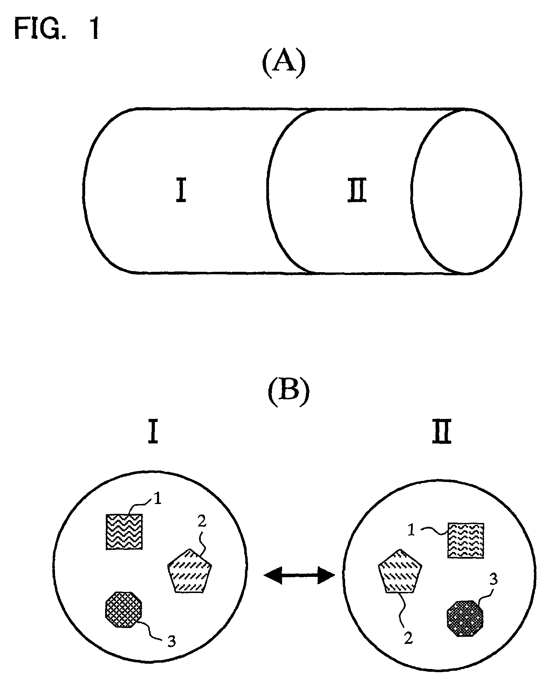

Fig. 1 is a figure which explains the concept of this invention. This invention has as one feature the use of two substances with a complementary relationship in the generation of random number sequences for use in encryption.

In Fig. 1,(A), a single solid substance is broken and divided into two portions I, II, to obtain two substances A, B which have a complementary relationship. Hence the two portions I, II have a complementary relationship.

The manner in which the substances A, B with such a complementary relationship are used to generate a random number sequence for use in encryption is explained as an example.

For example, a plastic piece is broken into halves, and the two halves are set in prescribed locations. If the piece is properly divided in two at the broken face, the protrusions and depressions in the surfaces will be mutually inverted (in a complementary relationship). By inverting one of these, exactly the same surface state is obtained.

Hence if the protrusions and depressions in the surface are made to correspond to logical "1"s and "0"s, exactly the same random number sequence can be obtained independently from the two halves of the plastic piece. Moreover, the substances are obtained such that no other substances extant have the same random number sequence.

Fig. 1,(B) is an example of the surfaces of the two fragments, broken and divided into two portions I, II. When considering the regions 1, 2, 3 on the surfaces, a complementary relationship is maintained between the lefthand and right-hand fragments I, II, and exactly the same random number sequence can be obtained for each region.

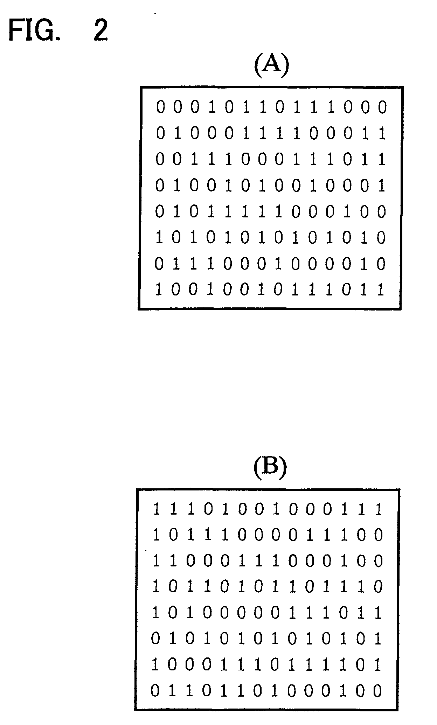

Fig. 2 shows an example of patterns of random number sequences; a random number sequence is obtained in which logical "0"s and "1"s result from depressions and protrusions in a random manner in each of the regions of the surfaces of the two portions I, II, for example, in region 1. Fig. 2,(A) is a pattern of the depressions and protrusions in the region 1 of the surface of the portion I in Fig. 1, expressed as a series of logical "0"s and "1"s. The pattern of logical "0"s and "1"s appears randomly.

The length of the random number sequence is preferably amply large; for example, it is preferably 350 kilobytes or more.

On the other hand, Fig. 2,(B) is a pattern of the depressions and protrusions in the region 1 of the surface of the portion II in Fig. 1, expressed as a series of logical "0"s and "1"s. The depressions and protrusions in the surfaces of portion I and portion II are in a mutually complementary relationship, and are mutually opposite, so that the pattern of logical "0"s and "1"s in Fig. 2,(B) corresponds to the logical inversion of the pattern of logical "0"s and "1"s in Fig. 2,(A).

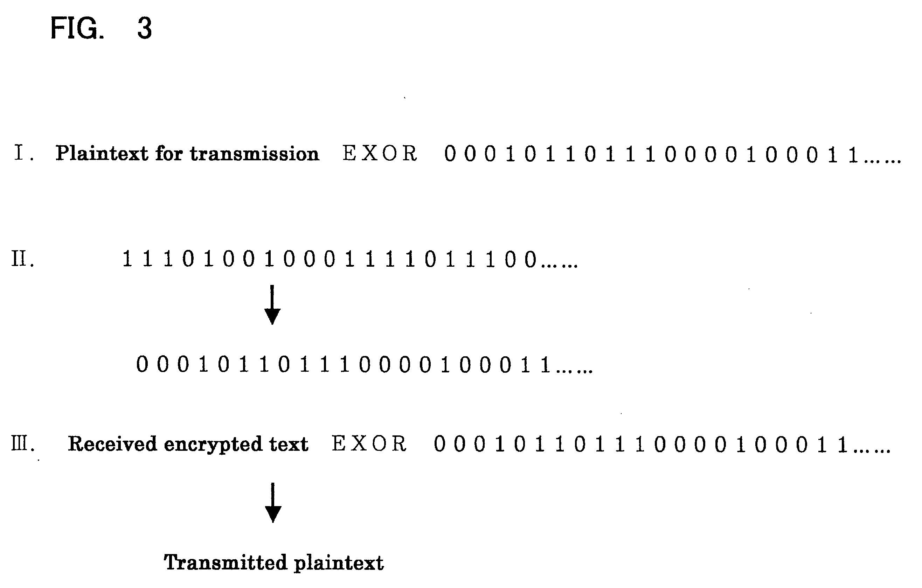

Hence as shown in Fig. 3, which explains encryption and decryption, in this invention the exclusive OR of the plaintext for transmission from the transmission origin and a random number sequence such as that of Fig. 2,(A) is taken, and this is sent, as encrypted text, over a transmission channel such as the Internet to the transmission destination (see I. in Fig. 3).

At the transmission destination, the exclusive OR of the received encrypted text and the result of logical inversion of the random number sequence of Fig. 2,(B) (see II. in Fig. 3) is taken. By this means, the transmitted plaintext is obtained (see III. in Fig. 3).

Here the properties of the above plastic piece for use in obtaining substances A and B (corresponding to portions I and II in Fig. 1) with a complementary relationship are explained.

In order to obtain a sample for which appropriate protrusions and depressions appear on a broken face of the plastic, it is necessary that the sample be a composite, rather than a plain plastic material. A composite refers to a plastic intermixed with other substances by formulating or blending, or a plastic having crystallinity or some other high-order structure.

Because plain hard plastics are brittle, a broken face is smooth, and so such substances are inappropriate as samples requiring protrusions and depressions. Examples of plastics providing higher-order structure include the following:
a blend of polyvinyl chloride and a reinforcing agent (a resin with a rubber component; for example, a copolymer of methyl methacrylate-butadiene-styrene (MBS));
a polypropylene block copolymer (wherein the polymerization is accomplished stereoregularly to furnish crystallinity in which isotactic/syndiotactic/atactic structures are formed in continuous blocks);
polyethylene that is crystalline (if there are few branches, the crystallinity is increased);
styrene polymerized in the presence of vinyl butadiene;
ABS (a ternary copolymer of acrylonitrile, butadiene and styrene, obtained for example by polymerization of acrylonitrile and styrene in the presence of polybutadiene dissolved in the reaction mixture); or similar.

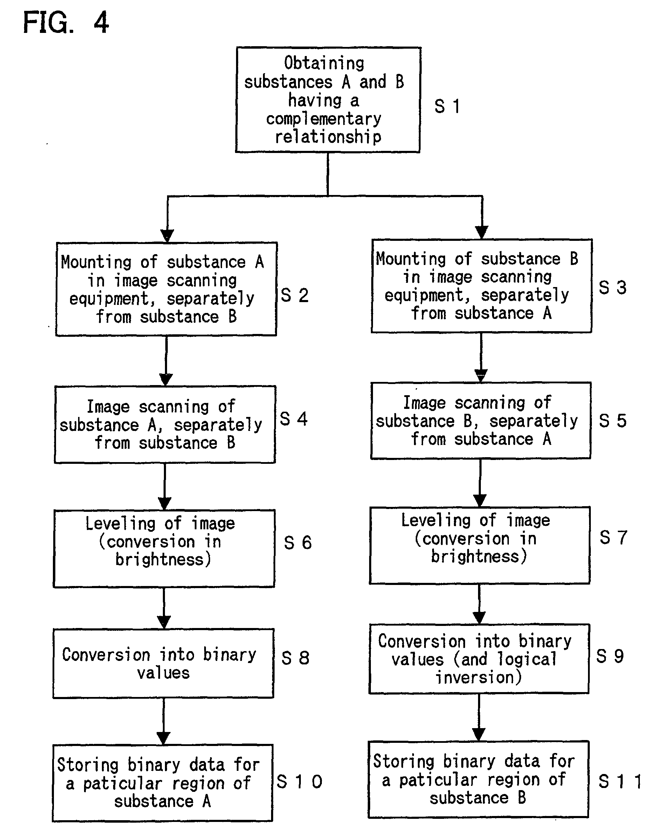

Fig. 4 is a flowchart showing the procedure for using a plastic like that of the above examples to obtain binary values as a random number sequence acquired prior to cryptographic communication.

First, substances A, B as having a complementary relationship, like those described above, are obtained (step S1). As one embodiment, a polyvinyl chloride piece is ruptured using a Charpy impact testing machine. By this means two substances A, B are obtained.

Charpy impact testing machines are known as tools for use in impact testing of hard plastics. A V-shape notch is formed in the center of the polyvinyl chloride piece, and with both ends supported, the hammer of the Charpy impact testing machine is used to impart a shock, dividing the piece into two fragments.

The two substances A, B obtained by division into two fragments in this way are each mounted in image scanning equipment separately at the transmission origin and at the transmission destination (step S2, step S3).

Next, image scanning of the broken faces of the substances A, B is performed separately (step S4, step S5). The images resulting from image scanning of the broken faces are leveled with respect to brightness in the broken faces, using the same criteria, at the transmission origin and at the transmission destination, so as to facilitate conversion to binary values (step S6, step S7).

The leveled image is then converted at prescribed intervals to binary values for black and white, using as criteria a prescribed brightness level (step S8, step S9). By this means the binary patterns of Fig. 2 are obtained. As shown in Fig. 2,(A) and Fig. 2,(B), the patterns for the complementary substances A, B are logically inverted; and so the results for substance B are converted to binary values and then inverted (step S9).

The binary value patterns obtained in this way are stored as random number sequence data for each particular region (for example, region 1, 2, or 3 in Fig. 1,(B)).

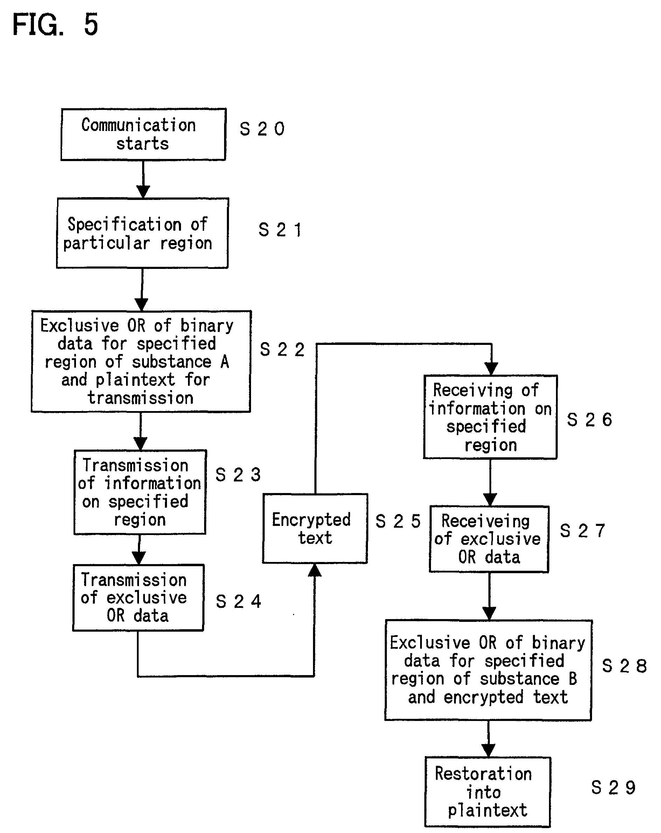

Fig. 5 is a flowchart used to explain the procedure for performing cryptographic communication using random number sequence data stored in this way.

First, the start of communication between the transmission origin and the transmission destination is confirmed (step S20). The transmission origin specifies a particular region common to the substance A and to the substance B (step S21). Next, the exclusive OR of the binary values for the specified region of the substance A, and the text for transmission, is determined (step S22). By this means, preparation for transmission are completed at the transmission origin.

Then, transmission from the transmission origin to the transmission destination of information on the specified region (step S23) and of data resulting from the exclusive OR operation (step S24) is performed. By this means, encrypted text is sent over the transmission channel (step S25).

When transmitting the exclusive OR data (step S24), it is also possible to append and send the above information specifying the particular region (step S23); but in consideration of protection of confidentiality, it is preferable that transmission of the information specifying the particular region be performed using a physically separate line.

At the transmission destination, the information sent from the transmission origin specifying a particular region is received (step S26), and the exclusive OR data, that is, the encrypted text, is received (step S27). Binary data corresponding to the specified particular region is read out, and is used to take the exclusive OR with the received encrypted text (step S28).

By this means, the decrypted plaintext can be determined (step S29).

In the above, an example is explained in which the random number sequences are obtained in advance at the transmission origin and at the transmission destination by image scanning. However, the present invention is not limited to this; it is also possible to obtain a corresponding random number sequence by image scanning of a specified particular region each time encrypted text is transmitted.

Also, as the method of encryption using the generated random number sequence, in addition to the above method in which the exclusive OR of the ASCII codes of the plaintext and a random number sequence is calculated, the code conversion method can also be modified for each message communicated, by for example specifying substitution among rows or substitution among columns of the random number sequence, or by specifying a start position for the random number sequence. Further, the substances A and B need only be objects for which there is a correlation in the measurement data of each; for example, a plastic piece produced using a mold with an irregular, complex surface (to generate a random number sequence from the surface protrusions and depressions), or a polymeric compound (to generate a random number sequence from the monomer sequence), produced without leaving record of a recipe, or synthesized or produced accidentally (for instance, by a runaway reaction), is also possible.

Below, an embodiment of this invention is explained.

Five parts MBS were mixed with 100 parts polyvinyl chloride resin (1000 ZEST), and press-worked at 175°C.

Specimen pieces were prepared using a mold for No. 1 test specimens for B-notch testing, conforming to the "Charpy impact testing method for hard plastics" of JIS K 7111, and rupture tests were performed.

When performing impact rupture tests, it was confirmed that the specimens were divided into two fragments, with no scattering of other smaller fragments.

One of the broken fragments of a specimen was set on side A of image processing equipment, the other fragment was set on side B, and the rupture surfaces were observed. When one of the ruptured test fragments was set, the lighting conditions for the image processing equipment were fixed, and the surface states were observed.

The magnification was set to ten times, and with the threshold value conditions as a parameter, conversion into binary values was performed. The binary black-and-white pixels were in two dimensions, but by using a program, linked with the image processing equipment, a one-dimensional random number sequence was obtained, with "0" representing white and "1" representing black pixels.

This random number sequence was used as an encryption key, and the exclusive OR of the plaintext and the random number sequence was taken to perform encryption. At the transmission destination, where the encrypted text is to be received and decoded, the surface state of the other ruptured test fragment of polyvinyl chloride was observed and measured using the same model of image processing equipment.

At this time, image processing equipment, the lighting conditions, threshold values and other parameters of which had been adjusted in advance such that a black-and-white inversion of exactly the same binary image was obtained, was used to obtain a one-dimensional random number sequence, with "1" representing white and "0" representing black. On using this random number sequence to decode the encrypted text, decryption was successful.

As described above, by means of this invention, even if the encrypted text and the region specification signal were to be received by a third party, it would be difficult for the third party to decode the encrypted text without possession of a ruptured test fragment. Because there exist only two ruptured test fragments, if one were stolen, its absence would enable immediate inference of the theft.

Moreover, by replacing the ruptured test fragments being used, leaks of confidential information due to electronic eavesdropping of cryptographic communications could be held to a minimum.

In the above, embodiments of this invention have been explained with reference to the drawings; however, the scope of protection of this invention is not limited to these embodiments. The scope equivalent to the descriptions of the claims is also included in the scope of this invention.

### INDUSTRIAL APPLICABILITY

By means of this invention, the random number sequence serving as the key for conversion of plaintext to encrypted text, and for decoding of encrypted text into plaintext, cannot easily be stolen by other parties, and the fact of its being stolen could be immediately inferred. Hence a method of communication can be realized which can be executed between two parties desiring a higher degree of confidentiality.

## Claims

1. A cryptographic communication method comprising the steps of:
placing at a transmission origin a substance A;
placing at a transmission destination a substance B, from which measurement data correlated with measurement data of said substance A can be obtained;
at said transmission origin, measuring the data for said substance A, generating a first random number sequence from said measurement data, using said first random number sequence to convert plaintext into encrypted text, and transmitting said encrypted text to said transmission destination; and,
at said transmission destination, measuring the data for said substance B, generating a second random number sequence from said measurement data, and using said second random number sequence to convert said encrypted text into plaintext.

2. The cryptographic communication method according to Claim 1, **characterized in that**, at said transmission origin, said encrypted text is generated by taking the exclusive OR of said first random number sequence and said plaintext, and at said transmission destination, said plaintext is restored by taking the exclusive OR of said second random number sequence and the received encrypted text.

3. The cryptographic communication method according to Claim 1, further comprising a step in which algorithm to generate the random number sequence is modified upon each transmission, by substitution among rows, by substitution among columns, or by specifying the start position of said first random number sequence.

4. The cryptographic communication method according to Claim 3, wherein information on the substitution among rows, the substitution among columns, or the specification of the start position of said first random number sequence, is appended to said encrypted text, or is transmitted by a separate line.

5. The cryptographic communication method according to Claim 1, wherein
a single solid is broken into two fragments, one fragment of which is used as said substance A, and placed at the transmission origin;
the other fragment is used as said substance B, and placed at the transmission destination;
at said transmission origin, an image of the protrusions and depressions in the broken face of the former fragment is converted into binary values for black and white to generate said first random number sequence; and,
at the transmission destination, an image of the protrusions and depressions in the broken face of the latter fragment is converted into binary values for black and white, and the binary values are logically inverted, to generate said second random number sequence.

6. The cryptographic communication method according to Claim 5, wherein a random number sequence is generated for each of a plurality of regions of said broken faces, one of the plurality of regions with a random number sequence is specified, said encrypted text is generated using the random number sequence of the specified region, and information on the specified region is appended to the encrypted text and transmitted, or is transmitted by a separate line, to the transmission destination.

7. The cryptographic communication method according to Claim 1, wherein said substances A and B are of a polymeric compound produced without leaving record of a recipe, or produced or synthesized accidentally.

8. The cryptographic communication method according to Claim 1, wherein said measurement data for the substances A and B are of the monomer sequence of a polymer.

9. The cryptographic communication method according to Claim 1, wherein said encrypted text is transmitted over the Internet.
